# FASCICULE DE BREVET EUROPEEN

(11) **EP 3 797 309 B1**
(45) Date de publication et mention de la délivrance du brevet: **27.04.2022**
(21) Numéro de dépôt: 19723811.6
(22) Date de dépôt: 17.05.2019
(51) Int. Cl.: G01S 5/02, G05D 1/06, G05D 1/00, B63G 8/00

(54) **PROCÉDÉ DE POSITIONNEMENT D'UN ENSEMBLE DE VÉHICULES**
VERFAHREN ZUM POSITIONIEREN EINER GRUPPE VON FAHRZEUGEN
METHOD FOR POSITIONING A GROUP OF VEHICLES

(30) Priorité: 23.05.2018 FR 1854321
(43) Date de publication de la demande: 31.03.2021
(73) Titulaire: KOPADIA, 91400 Orsay (FR)
(72) Inventeur: CHARPENTIER, Anne, 91120 Palaiseau (FR); GIRARD, Alexandre, 91120 Palaiseau (FR); MEYRUEY, Pierre-Yves, 91120 Palaiseau (FR); ROLLAND, Timothée, 91120 Palaiseau (FR); TAILLANTER, Erwan, 91120 Palaiseau (FR); THOMAS, Augustin, 91120 Palaiseau (FR); VANDAME, Nicolas, 91120 Palaiseau (FR)
(74) Mandataire: Berton, Anthony Christian Jacques
(86) Numéro de dépôt international: PCT/EP2019/062768
(87) Numéro de publication internationale: WO 2019/224115

(56) Documents cités:
- SEOKHOON YOON ET AL: "Cooperative Search and Survey Using Autonomous Underwater Vehicles (AUVs)", IEEE TRANSACTIONS ON PARALLEL AND DISTRIBUTED SYSTEMS, IEEE SERVICE CENTER, LOS ALAMITOS, CA, US, vol. 22, no. 3, 1 mars 2011 (2011-03-01), pages 364-379, XP011328281, ISSN: 1045-9219, DOI: 10.1109/TPDS.2010.88
- ENGEL R ET AL: "Relative positioning of multiple underwater vehicles in the GREX project", OCEANS 2009-EUROPE, 2009. OCEANS '09, IEEE, PISCATAWAY, NJ, USA, 11 mai 2009 (2009-05-11), pages 1-7, XP031540698, ISBN: 978-1-4244-2522-8
- FABIANI FILIPPO ET AL: "A passivity-based framework for coordinated distributed control of AUV teams: Guaranteeing stability in presence of range communication constraints", OCEANS 2016 MTS/IEEE MONTEREY, IEEE, 19 septembre 2016 (2016-09-19), pages 1-5, XP033014417, DOI: 10.1109/OCEANS.2016.7761253

## Description

La présente invention concerne un procédé de positionnement d'un ensemble de véhicules les uns par rapport aux autres, notamment un ensemble de véhicules autonomes subaquatiques, aériens ou terrestres.

Il est connu de l'état de la technique de mettre en œuvre un véhicule autonome, notamment sous-marin, afin de cartographier l'environnement de ce véhicule en temps réel et ainsi lui permettre de se localiser dans cet environnement. Ce procédé de localisation est connu sous l'appellation SLAM qui signifie en anglais Simultaneous Localization and Mapping ou, en français, cartographie et localisation simultanées. Ce procédé est mis en œuvre quand il n'est pas possible d'avoir accès à un système de positionnement de type GPS, signifiant en anglais Global Positioning System. Ce cas se rencontre, par exemple, lorsqu'il est nécessaire de localiser un véhicule sous-marin ou un véhicule évoluant dans un bâtiment. En effet, un véhicule subaquatique n'a pas accès à une localisation GPS. Il en est de même pour un véhicule se déplaçant au sein d'un bâtiment. Le véhicule autonome construit alors, à l'aide d'une caméra ou d'un laser par exemple, une carte de son environnement lui permettant ainsi de se localiser d'une manière relativement précise. Ce procédé de cartographie et localisation simultanées demande de traiter un volume considérable d'informations, comme par exemple des images en trois dimensions, et par conséquent il est nécessaire d'intégrer au véhicule autonome un ordinateur possédant des capacités de traitement des données acquises élevées. Il est donc nécessaire de prévoir des batteries permettant de fournir suffisamment d'énergie électrique à cet ordinateur. Afin de réaliser plus rapidement la cartographie d'un environnement, il est également connu de l'état de la technique d'appliquer le procédé SLAM à un ensemble de véhicules autonomes, appelé également meute de drones, afin de localiser chaque véhicule de manière absolue. Une meute de drones comporte au moins deux drones. Le procédé SLAM permet aux véhicules autonomes de se localiser les uns par rapport aux autres. Chaque véhicule réalise alors une cartographie de son environnement à l'aide d'un ou plusieurs capteurs. Un ordinateur traite les informations acquises en temps réel. Chaque véhicule communique en temps réel les informations qu'il a acquises avec les autres véhicules de la meute. Il existe également des procédés de localisation par triangulation ou par intégration de données inertielles. Les inconvénients principaux de ces méthodes sont des besoins en transfert de données et en capacité de traitement par ordinateur importants, un temps de réalisation de la cartographie élevé en ce qui concerne le procédé SLAM et une consommation en énergie électrique, notamment des ordinateurs et des moyens de communication entre véhicules, considérable ayant notamment pour conséquence de prévoir sur chaque véhicule des batteries relativement lourdes par rapport à leur masse.

L'objectif de la présente invention est donc d'améliorer la localisation des meutes de véhicules, notamment autonomes, tout en diminuant leurs consommations énergétiques et leur temps de mission.

Pour ce faire, l'invention a notamment pour objet un procédé de positionnement d'un ensemble de véhicules comprenant au moins deux véhicules défini par la revendication 1.

Outre les caractéristiques principales mentionnées au paragraphe précédent, le procédé selon l'invention peut présenter une ou plusieurs caractéristiques complémentaires parmi les suivantes :
De préférence, au moins un des véhicules de l'ensemble de véhicules est autonome.

De préférence, les véhicules sont subaquatiques.

De manière préférée, l'ensemble de véhicules comporte quatre véhicules.

Selon un aspect préféré, au moins un des véhicules de l'ensemble de véhicules a une position absolue connue au préalable.

De manière préférée, le premier véhicule est également exclu de l'étape de recherche d'un autre point remarquable.

De préférence, le procédé comprend en outre une étape de récupération de l'ensemble des véhicules afin de traiter les informations de localisation acquises.

Avantageusement, au moins un des véhicules de l'ensemble de véhicules comporte un capteur magnétique.

De préférence, les étapes de communication sont réalisées au moyen d'un système de communication ayant un débit de transmission d'informations entre les véhicules d'environ 100 bits par seconde.

De manière préférée, l'ensemble de véhicules a pour mission le contrôle de pipelines.

L'invention sera mieux comprise à la lecture de la description qui suit, faite en référence aux figures annexées, dans lesquelles :
- la figure 1 est une vue en perspective d'un ensemble de véhicules sous-marins autonomes réalisant une mission selon un mode de réalisation de l'invention ;
- la figure 2 est une représentation schématique de l'ensemble de véhicules sous-marins autonomes représenté sur la figure 1 dans laquelle un premier véhicule de l'ensemble de véhicules a repéré un premier point remarquable ;
- la figure 3 est une représentation schématique de l'ensemble de véhicules sous-marins autonomes représenté sur la figure 2 dans laquelle un second véhicule de l'ensemble de véhicules a repéré un second point remarquable.

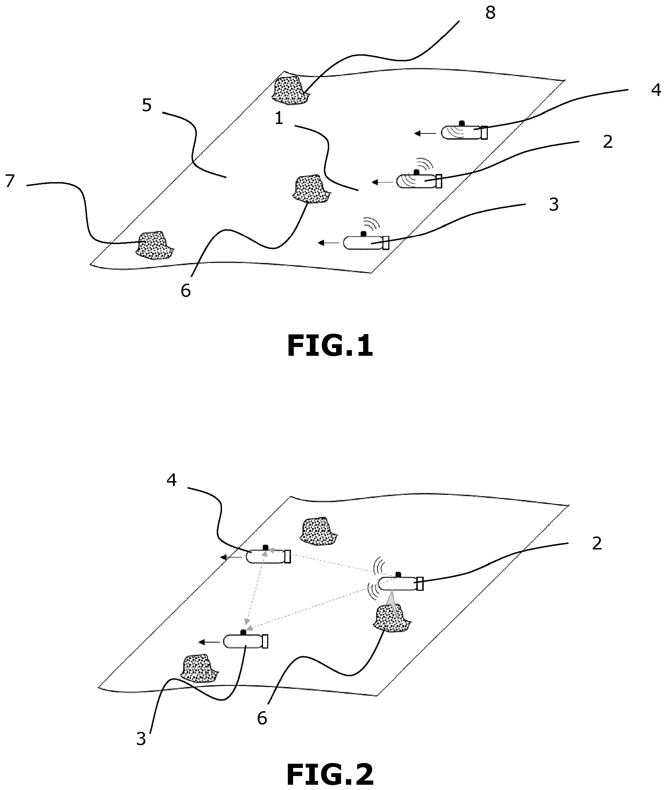

En référence à la figure 1, il est représenté de manière schématique un mode de réalisation selon l'invention. On peut voir un ensemble de véhicules 1 subaquatiques et autonomes comportant un premier véhicule 2, un second véhicule 3 et un troisième véhicule 4. On aperçoit également le fond marin 5. Afin de se mouvoir, le premier véhicule 2 ainsi que les second et troisième véhicules subaquatiques comprennent un corps dans lequel un système de propulsion est intégré (non représenté). Le système de propulsion comprend une ou plusieurs hélices et un moteur afin de leur fournir de l'énergie mécanique. De manière alternative, le système de propulsion comprend une ou plusieurs turbines. Le moteur est éventuellement contrôlé par un ordinateur. Le premier véhicule 2 comprend également une unité de mesure inertielle (en anglais Inertial Measurement Unit ou IMU) configurée de manière à guider le premier véhicule 2 vers une position souhaitée. L'IMU peut comprendre également des accéléromètres, des gyroscopes et d'autres capteurs de mouvement. Il est fourni initialement à l'IMU la position actuelle du premier véhicule 2 ainsi que sa vitesse. Cette information provient d'une autre source, par exemple, un opérateur, un GPS ou un autre IMU localisé sur un navire ou sur un autre véhicule subaquatique. Ensuite, l'IMU calcule sa propre position et sa vitesse en se basant sur les informations provenant de ses capteurs de mouvement et/ou de transducteurs. Le premier véhicule 2 peut également comporter un compas, un altimètre, pour mesurer son altitude, ou un capteur de pression pour mesurer sa profondeur. Par ailleurs, le premier véhicule 2 peut également comprendre un système pour éviter les obstacles, un système de communication sans fil, par exemple par Wi-Fi, et un système de modem Haute Fréquence, acoustique ou optique, afin de communiquer sa position par rapport aux second et troisième véhicules subaquatiques 3, 4. L'IMU permet au premier véhicule 2 d'être localisé de manière relativement précise pendant environ 30 minutes. Après ce laps ce temps, l'incertitude liée à la localisation du premier véhicule 2 devient importante, notamment à cause des caractéristiques des courants marins qui ne sont pas connues au préalable. Le premier véhicule 2 comporte également des ailerons, des propulseurs transversaux, latéraux et/ ou verticaux afin de le guider jusqu'à une position souhaitée. Ces ailerons peuvent être utilisés en combinaison avec le système de propulsion. Le premier véhicule 2 comporte également un système de flottaison de manière à contrôler sa profondeur par rapport à la surface de l'eau. En outre, le premier véhicule 2 peut comprendre une antenne et un système acoustique basse fréquence associé afin de communiquer à longue distance avec un navire. Ce système acoustique peut être un modem acoustique apte à recevoir les ondes acoustiques et à les transformer en signaux électriques et vice versa. De manière alternative, ou en complément, le système acoustique comprend un système Ultra-Short Baseline (USBL). Ces systèmes mettent en œuvre un procédé de positionnement sous-marin acoustique. Un système USBL complet comprend un émetteur-récepteur, qui est installé sur un navire ou sur un autre véhicule subaquatique, et un transpondeur sur le premier véhicule 2. L'ordinateur est utilisé afin de calculer une position à partir des distances mesurées par l'émetteur-récepteur. Par exemple, une impulsion acoustique est transmise par l'émetteur-récepteur et est détectée par le transpondeur, qui lui-même répond avec sa propre impulsion acoustique. Cette impulsion de retour est détectée par l'émetteur-récepteur sur le navire ou sur un autre véhicule subaquatique. Le temps entre la transmission de l'impulsion acoustique initiale et la détection de la réponse est mesuré par le système USBL et converti en une distance. Afin de calculer la position du premier véhicule 2, le système USBL calcule la distance et/ou l'angle à partir de l'émetteur-récepteur jusqu'au premier véhicule 2. Les angles sont mesurés par l'émetteur-récepteur qui comprend un ensemble de transducteurs. L'émetteur-récepteur comporte, par exemple, au moins trois transducteurs séparés au plus de 30 cm. De la même manière que l'IMU, le système USBL permet une localisation relativement précise pendant, par exemple, environ 30 minutes pour le cas d'une synchronisation des émissions dépendante d'une une horloge interne.

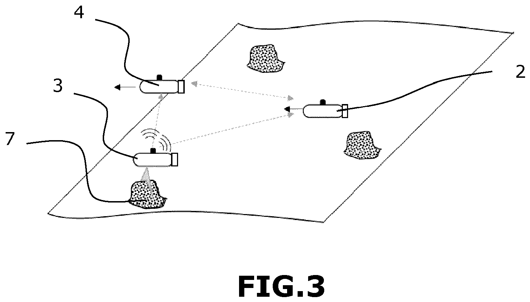

Le premier véhicule 2 peut prendre plusieurs formes, par exemple une forme de sous-marin ayant une section transversale sensiblement cylindrique ou ellipsoïdale. De préférence, le corps du premier véhicule 2 est en composite carbone, en verre ou dans un matériau non conducteur d'électricité. Le premier véhicule 2 comporte un système de flottabilité pouvant comprendre une chambre destinée à être remplie par l'eau environnante, ou vidée de celle-ci, afin de contrôler la profondeur du premier véhicule 2. Dans une autre configuration, le premier véhicule peut comprendre deux chambres ou plus. Par ailleurs, comme vu précédemment, le premier véhicule 2 comporte un moteur destiné à faire tourner les hélices permettant de produire une poussée. Les hélices reçoivent de l'eau via un conduit formé dans le corps du premier véhicule 2. Elles peuvent être également disposées à l'extérieur du véhicule 2. Le conduit comporte une ouverture permettant l'entrée de l'eau et une ouverture permettant l'expulsion de l'eau. Ces ouvertures peuvent être localisées sur l'avant, l'arrière ou les côtés du corps du premier véhicule 2. Le corps du premier véhicule 2 peut également comporter des conduits ou turbines afin de contrôler ses mouvements de rotation et/ou translation. Dans le mode de réalisation de la figure 1, l'ensemble de véhicules subaquatiques 1 réalisent une mission quelconque, par exemple une inspection de pipelines situés sur le fond marin 5. L'ensemble de véhicules 1 a démarré sa mission à partir d'une position connue et la position de chaque véhicule est connue grâce à, par exemple, leurs IMU ou leurs USBL. Par ailleurs, le premier véhicule 2 communique, en temps réel, sa position au second véhicule 3 et au troisième véhicule 4, et réciproquement au moyen d'un système de communication sans fil, comme vu précédemment. Chaque véhicule est à la recherche d'un point remarquable. Avantageusement, l'invention permet de s'affranchir de l'obligation de connaître avant le début de la mission la carte des points remarquables pour un environnement donné. On aperçoit sur la figure 1 un premier rocher 6, un second rocher 7 et un troisième rocher 8 localisés sur le fond de mer 5. Leurs localisations respectives ne sont pas connues avant le démarrage de la mission. En référence maintenant à la figure 2, le premier véhicule 2 repère la présence d'un point remarquable, en l'occurrence le premier rocher 6, à l'aide, par exemple, d'une caméra ou d'un sonar tel qu'un sonar multifaisceaux. Dans un autre mode de réalisation de l'invention, le véhicule subaquatique peut être équipé d'un ou plusieurs capteurs magnétiques. Cette configuration est bien adaptée aux missions consistant à étudier des environnements dans lesquels les équipements sont constitués de matériaux magnétiques, comme par exemple un champ pétrolier comportant des pipelines. Le premier véhicule 2 communique alors sa position au second véhicule 3 et au troisième véhicule 4 et reste quasiment stationnaire au-dessus du rocher 6 avec une précision, par exemple, de l'ordre de 1 mètre. Le second véhicule 3 et le troisième véhicule 4 continue à rechercher un nouveau point remarquable tout en restant à portée du premier véhicule 2 afin de pouvoir communiquer avec ce dernier et connaître leurs positions relatives. Leurs positions absolues sont également déterminées car les véhicules ont démarré leur mission à partir d'une position connue et ont continué à être localisés grâce à l'IMU ou l'USBL de chaque véhicule. Avantageusement, la communication entre les véhicules de la meute est réduite et permet ainsi à chaque véhicule de traiter un faible débit d'information. Par conséquent, le système de traitement de l'information ne nécessite que peu d'énergie électrique. A titre d'exemple, le débit de transmission d'informations est de l'ordre de 100 bits par seconde. En référence maintenant à la figure 3, le second véhicule 3 repère la présence d'un nouveau point remarquable, en l'occurrence le second rocher 7. Le second véhicule 3 communique alors sa position au premier véhicule 2 et au troisième véhicule 4 et reste quasiment stationnaire au-dessus du second rocher 7 avec une précision, par exemple, de l'ordre de 1 mètre. Le premier véhicule 2, qui était quasiment stationnaire au-dessus du premier rocher 6, se remet alors en mouvement pour rechercher un nouveau point remarquable. Le troisième véhicule 4 poursuit également la recherche d'un point remarquable. Quand la mission de la meute de véhicules est terminée, les véhicules 2, 3, 4 sont alors récupérés et leurs données de localisation sont transmises afin de les traiter.

Dans un autre mode réalisation de l'invention, le premier véhicule 2 ne se remet pas en mouvement pour rechercher un nouveau point remarquable et reste alors quasiment stationnaire au-dessus du premier rocher 6. Ainsi, le premier véhicule 2 et le second véhicule 3 restent quasiment stationnaires respectivement au-dessus du premier rocher 6 et au-dessus du second rocher 7. Cette configuration a pour avantage d'augmenter la précision de positionnement. En effet, dans ce mode de réalisation, les véhicules à la recherche d'un nouveau point remarquable se localisent par rapport aux positions du premier véhicule 2 et du second véhicule 3 permettant ainsi de réduire l'incertitude de positionnement des véhicules par un calcul de triangulation faisant intervenir les positions du premier véhicule 2 et du second véhicule 3. Dans encore un autre de mode de réalisation, le premier véhicule 2 ne se remet pas non plus en mouvement pour rechercher un nouveau point remarquable et reste alors quasiment stationnaire au-dessus du premier rocher 6. La meute de véhicules comprend alors un premier véhicule 2, un second véhicule 3, un troisième véhicule 4 et un quatrième véhicule 9 soit quatre véhicules en tout. Dans ce mode de réalisation, le premier véhicule 2 et le second véhicule 3 restent quasiment stationnaires respectivement au-dessus du premier rocher 6 et au-dessus du second rocher 7 avec une précision, par exemple, de l'ordre d'un mètre et le troisième véhicule 4 et le quatrième véhicule 9 poursuivent leur recherche d'un point remarquable. Cette configuration est avantageuse car elle permet de réduire l'incertitude de positionnement des véhicules par un calcul de triangulation tout en ayant un nombre limité de véhicules. Un autre mode de réalisation possible est d'avoir un ensemble de véhicules comprenant uniquement un premier véhicule 2 et un second véhicule 3. Dans un premier temps, les premier et second véhicules 2, 3 cherchent un point remarquable. Lorsque le premier véhicule 2 repère un point remarquable, en l'occurrence le rocher 6, il communique alors sa position au second véhicule 3 et reste quasiment stationnaire au-dessus du rocher 6 avec une précision, par exemple, de l'ordre de 1 mètre. Le second véhicule 3 poursuit alors sa recherche d'un nouveau point remarquable. Lorsque le second véhicule 3 repère un nouveau point remarquable, en l'occurrence le rocher 7, il communique sa position au premier véhicule 2 et reste quasiment stationnaire au-dessus du rocher 7 avec une précision, par exemple, de l'ordre d'un mètre. Le premier véhicule 2 se remet alors en mouvement à la recherche d'un nouveau point remarquable et ainsi de suite. Dans un autre mode de réalisation, il est mis en œuvre plusieurs ensembles de véhicules. Chaque ensemble de véhicules est indépendant des autres ensembles de véhicules. Cette configuration permet de couvrir de larges zones et permet également d'attribuer à chaque ensemble de véhicules une mission différente.

Un point remarquable, au sens de l'invention, peut être un rocher ou une forme géométrique quelconque, mais également une variation magnétique, une variation de salinité ou tout autre changement présent dans l'environnement de l'ensemble de véhicules à condition que ces derniers comportent au moins un capteur idoine permettant de détecter ce changement ou cette variation et ayant également des caractéristiques permettant à un véhicule donné de rester quasiment stationnaire par rapport à ce point remarquable.

Il a été décrit des modes de réalisation de l'invention mettant en œuvre des véhicules subaquatiques autonomes et accomplissant une mission en milieu marin. L'invention peut également être mise en œuvre avec des véhicules terrestres ou aériens, respectivement, pour des missions terrestres ou aériennes. En outre, les véhicules peuvent être autonomes ou contrôlés par un opérateur, notamment à distance.

## Revendications

1. Procédé de positionnement d'un ensemble de véhicules (1) comprenant au moins deux véhicules (2, 3, 4, 9) par rapport à des points remarquables (6, 7, 8) comportant les étapes suivantes :
- une étape de démarrage à partir d'une position connue, à partir de laquelle la position de chaque véhicule est connue en utilisant soit une unité de mesure inertielle soit un système acoustique Ultra-Short Baseline, USBL, au moins un des deux installé sur chaque véhicule, les localisations respectives desdits points remarquables (6, 7, 8) n'étant pas connues;
- une étape de communication de la localisation d'au moins un premier véhicule (2) ayant découvert un premier point remarquable (6) à au moins un autre véhicule (3, 4, 9) de l'ensemble de véhicules (1), ledit premier véhicule (2) restant sensiblement stationnaire par rapport audit premier point remarquable (6) et au moins ledit autre véhicule (3, 4, 9) de l'ensemble de véhicules (1) continuant à rechercher un nouveau point remarquable en restant à portée du premier véhicule (2) afin de pouvoir communiquer avec ce dernier et déterminant sa position par rapport audit au moins premier véhicule (2) ;
- une étape de recherche d'un deuxième point remarquable, différent dudit premier point remarquable, par l'ensemble des véhicules (1) excepté ledit premier véhicule (2)..;
- une étape de communication de la localisation d'au moins un second véhicule (3) ayant découvert un deuxième point remarquable (7, 8) à au moins ledit premier véhicule (2), ledit second véhicule (3) restant sensiblement stationnaire par rapport audit deuxième point remarquable (7) et au moins ledit premier véhicule (2) déterminant sa position par rapport audit au moins second véhicule (3) ;
- une étape de recherche d'un autre point remarquable, différent des premier et deuxième points remarquables, par au moins un véhicule de l'ensemble des véhicules (1) excepté ledit second véhicule (3).

2. Procédé selon la revendication 1 **caractérisé en ce qu'**au moins un des véhicules (2, 3, 4, 9) de l'ensemble de véhicules (1) est autonome.

3. Procédé selon l'une quelconque des revendications précédentes **caractérisé en ce que** les véhicules (2, 3, 4, 9) sont subaquatiques.

4. Procédé selon l'une quelconque des revendications précédentes **caractérisé en ce que** l'ensemble de véhicules (1) comporte quatre véhicules (2, 3, 4, 9).

5. Procédé selon l'une quelconque des revendications précédentes **caractérisé en ce qu'**au moins un des véhicules (2, 3, 4, 9) de l'ensemble de véhicules (1) a une position absolue connue au préalable.

6. Procédé selon l'une quelconque des revendications précédentes **caractérisé en ce que** l'ensemble de véhicules (1) comporte au moins trois véhicules et quele premier véhicule (2) est également exclu de l'étape de recherche d'un autre point remarquable.

7. Procédé selon l'une quelconque des revendications précédentes **caractérisé en ce qu'**il comprend en outre une étape de récupération de l'ensemble des véhicules (1) afin de traiter les informations de localisation acquises.

8. Procédé selon l'une quelconque des revendications précédentes **caractérisé en ce qu'**au moins un des véhicules (2, 3, 4, 9) de l'ensemble de véhicules (1) comporte un capteur magnétique.

9. Procédé selon l'une quelconque des revendications précédentes **caractérisé en ce que** les étapes de communication sont réalisées au moyen d'un système de communication ayant un débit de transmission d'informations entre les véhicules (2, 3, 4, 9) d'environ 100 bits par seconde.

10. Procédé selon l'une quelconque des revendications précédentes **caractérisé en ce que** l'ensemble de véhicules (1) a pour mission le contrôle de pipelines.

## Patentansprüche

1. Verfahren zur Positionierung einer Gruppe von Fahrzeugen (1), die mindestens zwei Fahrzeuge (2, 3, 4, 9) umfasst, in Bezug auf markante Punkte (6, 7, 8), das die folgenden Schritte umfasst:
- einen Schritt des Ausgehens von einer bekannten Position, von der aus die Position jedes Fahrzeugs bekannt ist, wobei entweder eine Inertialmesseinheit oder ein akustisches System mit ultrakurzer Basislinie (USBL) verwendet wird, wobei die jeweiligen Orte der markanten Punkte (6, 7, 8) nicht bekannt sind;
- einen Schritt der Übermittlung des Standorts mindestens eines ersten Fahrzeugs (2), das einen ersten bemerkenswerten Punkt (6) entdeckt hat, an mindestens einem anderen Fahrzeug (3, 4, 9) der Gruppe von Fahrzeugen (1), wobei das erste Fahrzeug (2) in Bezug auf den ersten bemerkenswerten Punkt (6) im Wesentlichen stationär bleibt und mindestens das andere Fahrzeug (3, 4, 9) der Gruppe von Fahrzeugen (1) seine Position in Bezug auf das mindestens erste Fahrzeug (2) bestimmt;
- einen Schritt der Suche nach einem zweiten bemerkenswerten Punkt, der sich von dem ersten bemerkenswerten Punkt unterscheidet, durch die Gruppe von Fahrzeugen (1) mit Ausnahme des ersten Fahrzeugs (2);
- einen Schritt des Übermittelns des Standorts von mindestens einem zweiten Fahrzeug (3), das einen zweiten bemerkenswerten Punkt (7, 8) entdeckt hat, an mindestens dem ersten Fahrzeug (2), wobei das zweite Fahrzeug (3) in Bezug auf den zweiten bemerkenswerten Punkt (7) im Wesentlichen stationär bleibt und mindestens das erste Fahrzeug (2) seine Position in Bezug auf das mindestens zweite Fahrzeug (3) bestimmt
- einen Schritt der Suche nach einem anderen bemerkenswerten Punkt, der sich von dem ersten und zweiten bemerkenswerten Punkt unterscheidet, durch alle Fahrzeuge (1) mit Ausnahme des zweiten Fahrzeugs (3).

2. Verfahren nach Anspruch 1, **dadurch gekennzeichnet, dass** mindestens eines der Fahrzeuge (2, 3, 4, 9) der Gruppe von Fahrzeugen (1) autonom ist.

3. Verfahren nach einem der vorhergehenden Ansprüche, **dadurch gekennzeichnet, dass** die Fahrzeuge (2, 3, 4, 9) unter Wasser sind.

4. Verfahren nach einem der vorhergehenden Ansprüche, **dadurch gekennzeichnet, dass** die Gruppe von Fahrzeugen (1) vier Fahrzeuge (2, 3, 4, 9) umfasst.

5. Verfahren nach einem der vorhergehenden Ansprüche, **dadurch gekennzeichnet, dass** mindestens eines der Fahrzeuge (2, 3, 4, 9) der Gruppe von Fahrzeugen (1) eine vorher bekannte absolute Position hat.

6. Verfahren nach einem der vorhergehenden Ansprüche, **dadurch gekennzeichnet, dass** die Gruppe von Fahrzeugen (1) mindestens drei Fahrzeuge umfasst und das erste Fahrzeug (2) auch von dem Schritt der Suche nach einem weiteren markanten Punkt ausgeschlossen ist.

7. Verfahren nach einem der vorhergehenden Ansprüche, **dadurch gekennzeichnet, dass** es ferner einen Schritt des Wiederherstellens der Gruppe von Fahrzeugen (1) umfasst, um die gewonnenen Standortinformationen zu verarbeiten.

8. Verfahren nach einem der vorhergehenden Ansprüche, **dadurch gekennzeichnet, dass** mindestens eines der Fahrzeuge (2, 3, 4, 9) der Gruppe von Fahrzeugen (1) einen Magnetsensor umfasst.

9. Verfahren nach einem der vorhergehenden Ansprüche, **dadurch gekennzeichnet, dass** die Kommunikationsschritte mittels eines Kommunikationssystems mit einer Informationsübertragungsrate zwischen den Fahrzeugen (2, 3, 4, 9) von etwa 100 Bit pro Sekunde durchgeführt werden.

10. Verfahren nach einem der vorhergehenden Ansprüche, **dadurch gekennzeichnet, dass** die Gruppe von Fahrzeugen (1) die Aufgabe hat, Pipelines zu steuern.

## Claims

1. Method for positioning a set of vehicles (1) comprising at least two vehicles (2, 3, 4, 9) with respect to remarkable points (6, 7, 8) comprising the following steps :
- a step of starting from a known position, from which the position of each vehicle is known using either an inertial measurement unit or an Ultra-Short Baseline acoustic system, USBL, the respective locations of said remarkable points (6, 7, 8) not being known ;
- a step of communicating the location of at least a first vehicle (2) having discovered a first remarkable point (6) to at least one other vehicle (3, 4, 9) of the set of vehicles (1), the said first vehicle (2) remaining substantially stationary with respect to the said first remarkable point (6) and at least the said other vehicle (3, 4, 9) of the set of vehicles (1) determining its position with respect to the said at least first vehicle (2) ;
- a step of searching for a second remarkable point, different from said first remarkable point, by the set of vehicles (1) except said first vehicle (2) ;
- a step of communicating the location of at least one second vehicle (3) having discovered a second remarkable point (7, 8) to at least said first vehicle (2), said second vehicle (3) remaining substantially stationary with respect to said second remarkable point (7) and at least said first vehicle (2) determining its position with respect to said at least second vehicle (3)
- a step of searching for another remarkable point, different from the first and second remarkable points, by all the vehicles (1) except said second vehicle (3).

2. Method according to claim 1, **characterized in that** at least one of the vehicles (2, 3, 4, 9) of the set of vehicles (1) is autonomous.

3. Method according to any of the preceding claims, **characterized in that** the vehicles (2, 3, 4, 9) are underwater.

4. Method according to any one of the preceding claims, **characterized in that** the set of vehicles (1) comprises four vehicles (2, 3, 4, 9).

5. Method according to any of the preceding claims, **characterized in that** at least one of the vehicles (2, 3, 4, 9) of the set of vehicles (1) has a previously known absolute position.

6. Method according to any of the preceding claims, **characterized in that** the set of vehicles (1) comprises at least three vehicles and the first vehicle (2) is also excluded from the step of searching for a further remarkable point.

7. Method according to any one of the preceding claims, **characterized in that** it further comprises a step of recovering the set of vehicles (1) in order to process the acquired location information.

8. Method according to any of the preceding claims, **characterized in that** at least one of the vehicles (2, 3, 4, 9) of the set of vehicles (1) comprises a magnetic sensor.

9. A method according to any of the preceding claims **characterized in that** the communication steps are performed by means of a communication system having an information transmission rate between the vehicles (2, 3, 4, 9) of about 100 bits per second.

10. Method according to any one of the preceding claims, **characterized in that** the set of vehicles (1) has the task of controlling pipelines.
